# EUROPEAN PATENT APPLICATION

(11) **EP 1 676 724 A1**
(43) Date of publication of application: **05.07.2006**
(21) Application number: 04792136.6
(22) Date of filing: 07.10.2004
(51) Int. Cl.: B60C 11/03, B60C 11/04, B60C 11/11

(54) **TREAD STRUCTURE WITH HIGH TRACTION AND LOW VIBRATION**

(30) Priority: 09.10.2003 JP 2003350416
(71) Applicant: Bridgestone Corporation, Tokyo 1048340 (JP)
(72) Inventor: Akiyama, Hitoshi, Bridgestone Corporation, Tokyo 1048340 (JP)
(74) Representative: Whalley, Kevin
(86) International application number: PCT/JP2004/014839
(87) International publication number: WO 2005/035275

(57) **Abstract**

The invention provides a tread pattern which is required to have traction with respect to the ground and which suppresses generation of vibration during traveling of a vehicle, and provides a tread pattern which provides traction and reduced vibration regardless of expected usage conditions or under usage conditions that are different from expected usage conditions. Means for Solution

A tread pattern which provides improved traction with reduced vibration generation in which a contact patch is divided in the width direction thereof into right and left areas with respect to the traveling direction of the vehicle and each of the right and left areas is provided with tread lugs, wherein long-, middle-, and short-pitches are provided in each of the right and left areas, the tread patterns of the right and left areas are asymmetrical to each other, and total areas of the contact patches of each of the right and left areas are substantially equal to each other. 1, 1₁, 1₂, 1₃: tread lugs; L₁: long pitch; L₂: middle pitch; L₃: short pitch

## Description

### Technical Field

The present invention relates to a tread pattern for tires and crawlers mounted to vehicles for traveling. More specifically, the present invention relates to a tread pattern which provides improved traction with reduced vibration generation.

### Background Art

Tread lugs are provided on a surface of a tire or crawler used in a traveling apparatus such as a tractor or farm machinery or construction equipment in which traction with respect to the ground is required, and it has been attempted to improve traction by extending tread pitches.

The invention will be described with reference to, for example, a crawler tread. The crawler is usually divided in the width direction thereof into right and left areas, each area separately being provided with tread lugs. Although a tread with lugs disposed at extended pitches provides improved traction, such a lug arrangement will cause increased vibration, thereby making tread durability deteriorate.

In contrast, a tread with lugs disposed at short pitches suppresses generation of vibration, and improves tread durability. However, such a lug arrangement has disadvantages in that it cannot provide sufficient traction and mud easily becomes stuck between adjacent lugs.

Therefore, tread patterns of conventional treads are produced by compromising among traction, suppression of vibration, and the like in consideration of the conditions under which the crawler is to be used most.

### Disclosure of the Invention

### Problems to be Solved by the Invention

The invention relates to a tread pattern which is required to have traction with respect to the ground and which suppresses generation of vibration during traveling of a vehicle. The invention provides a tread pattern which provides traction with reduced vibration regardless of expected usage conditions or under usage conditions that are different from expected usage conditions.

### Means for Solving the Problems

The invention is, with respect to main features thereof, a tread pattern which provides improved traction and reduced vibration generation in which a contact patch is divided in the width direction thereof into right and left areas with respect to the traveling direction of the vehicle and each of the right and left areas is provided with tread lugs, wherein long-, middle-, and short-pitches are provided in each of the right and left areas, the tread patterns of the right and left areas are asymmetrical to each other, and total areas of the contact patches of each of the right and left areas are substantially equal to each other.

### Effect of the Invention

The present invention provides a tread pattern as described above, which makes it possible to provide a vehicle with improved traction and reduced vibration generation.

### Brief Description of the Drawings

Fig. 1 illustrates an outer surface of a crawler having a long-pitched tread pattern;
Fig. 2 illustrates an outer surface of a crawler having a middle-pitched tread pattern;
Fig. 3 illustrates an outer surface of a crawler having a short-pitched tread pattern;
Fig. 4 illustrates an outer surface of a crawler having a tread pattern according to the invention; and
Fig. 5 is a perspective view of a tire having a tread pattern according to the invention.

### Best Modes for Implementing the Invention

The invention relates to a tread pattern arrangement in which a contact patch is divided in the width direction thereof into right and left areas with respect to the traveling direction of the vehicle and each of the right and left areas is provided with tread lugs, wherein variously pitched tread lugs are provided adjacent to one another in each of the right and left areas, the tread patterns of the right and left areas are asymmetrical to each other, and total areas of the contact patches of each area are substantially equal to each other.

In particular, the invention provides a certain effect due to selecting only the following three types (conditions) of tread pitches from various kinds of tread pitches and arranging them regularly (and asymmetrically) in the left and right areas.

That is, long-pitched tread lugs are the structure which is mainly intended to attain great traction. Predetermined traction can be provided by long tread pitches with substantially no occurrence of mud becoming stuck between adjacent lugs. Middle-pitched tread lugs provide middle-leveled traction, and because the tread lugs are provided closer to one another, large vibration is not generated. Short-pitched tread lugs eliminate the problem of vibration, although there is occurrence of mud becoming stuck therebetween and little traction.

The invention achieves certain effects by combining these variously pitched tread lugs.

The tread pattern of the invention is configured by combining long-, middle-, and short-pitched tread lugs which are disposed asymmetrically in the width direction of the tread, and the total areas of the contact patches of the left and right areas are substantially equal to each other.

The reason why the tread lugs are disposed asymmetrically to each other in the width direction of the tread is so that the function of providing traction and vibration control can be properly distributed. If the tread lugs were arranged symmetrically in the width direction of the tread, traction would be provided at certain positions, while traction would be extremely reduced at certain other positions.

As for vibration, there is substantially no generation of vibration if a short-pitched tread pattern is provided throughout both of the right and left areas of the tread. In contrast, significantly increased vibration will be generated if a long-pitched tread pattern is provided throughout both of the right and left areas of the tread. That is, tread patterns which are symmetric in the width direction of the tread will result in significant difference in the effect of vibration reduction depending on the kind of pitch.

To prevent such a result, the invention provides a tread pattern which is asymmetrical in the width direction of the tread. However, the tread patterns of the left and right areas should be balanced in the width direction of the tread with respect to traction and generation of vibration, and thus, the total areas of the surfaces at which the tread lugs are provided on each of the left and right areas are made substantially equal to each other to achieve balance.

In terms of the balance between the right and left areas, it is preferable to provide an arrangement in which tread lugs disposed on the left and right areas do not substantially overlap one another in a cross-section along the width direction center of the tread.

Specifically, in a preferable tread pattern, tread lugs are disposed such that long-pitches are interposed between middle-pitches and short-pitches in terms of balance. If the tread pattern of one of the right and left areas is thus arranged, the other of the areas preferably has an oppositely pitched tread pattern.

Note that, in the invention, a short-pitched tread pattern is a pattern with substantially no space provided between adjacent tread lugs. Thus, for example, short-pitched tread lugs may be combined to form a larger tread lug. Of course, tread lugs can be of any form.

### Embodiment 1

The invention will be described in more detail with reference to the following examples.

### (Embodiment of Crawler)

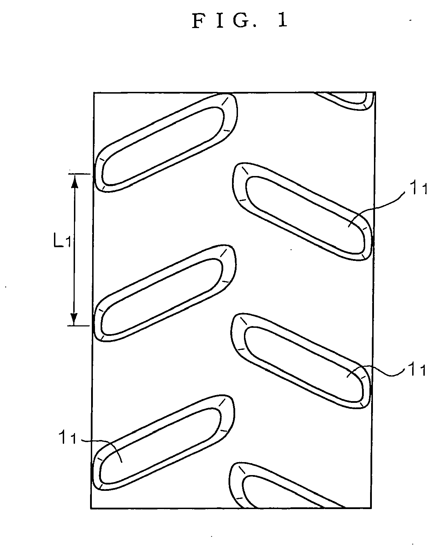

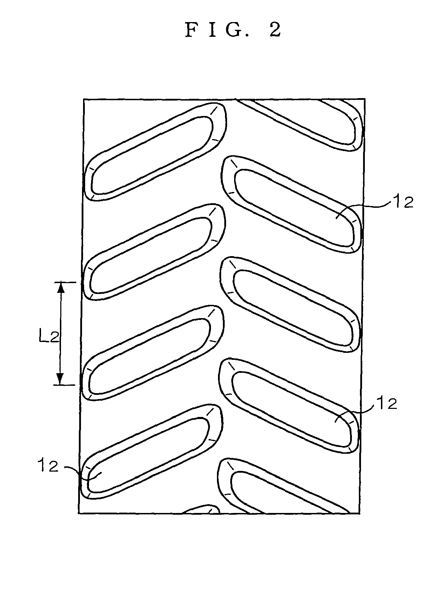

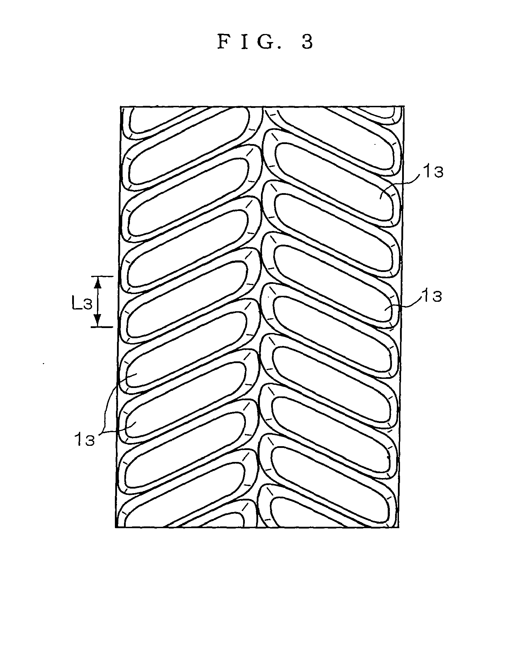

Figs. 1 to 3 show outer surfaces of crawlers 10 having tread patterns divided in the width direction thereof into right and left areas in which only a long-pitched tread pattern (L₁, Figure 1), a middle-pitched tread pattern (L₂, Figure 2), or a short-pitched tread pattern (L₃, Figure 3) is provided respectively. In these examples, the tread lugs 1₁, 1₂ and 1₃ are angled by about 30 degrees with respect to the width direction of the tread. Distances L₁, L₂ and L₃ between centers of adjacent lugs are respectively 225mm, 150mm and 75mm.

When such a crawler is used for traveling, in the pattern of Fig. 1, there is very little occurrence of mud becoming stuck between tread lugs 1₁ because adjacent tread lugs 1₁ are sufficiently spaced apart. Such a pattern will provide excellent traction. However, when an unillustrated tracker roller moves along an inner circumference of the crawler, the tracker roller will run alternately on the tread lugs 1₁ of both of the right and left areas, which causes twisting of the crawler in the width direction thereof, and considerable movement in a vertical direction thereof, whereby there if remarkable worsening with respect to vibration.

In the pattern of Fig. 2, the spaces between adjacent tread lugs 1₂ are narrower than those in Fig. 1. Thus, such a pattern has middle-leveled effects in providing traction and reducing vibration. However, at the same time, this means that excellent effects cannot be expected with respect to either of providing traction or reducing vibration. In addition, there is occurrence of mud becoming stuck at many areas.

In the pattern of Fig. 3, because adjacent lugs 1₃ are disposed very close to one another, occurrence of mud becoming stuck between adjacent lugs 1₃ is severe. Thus, substantially no traction can be provided with this pattern. However, when the tracker roller is moving, the tracker roller is always running on both right and left tread lugs 1₃, and thus, there is an advantage in that generation of vibration is greatly reduced.

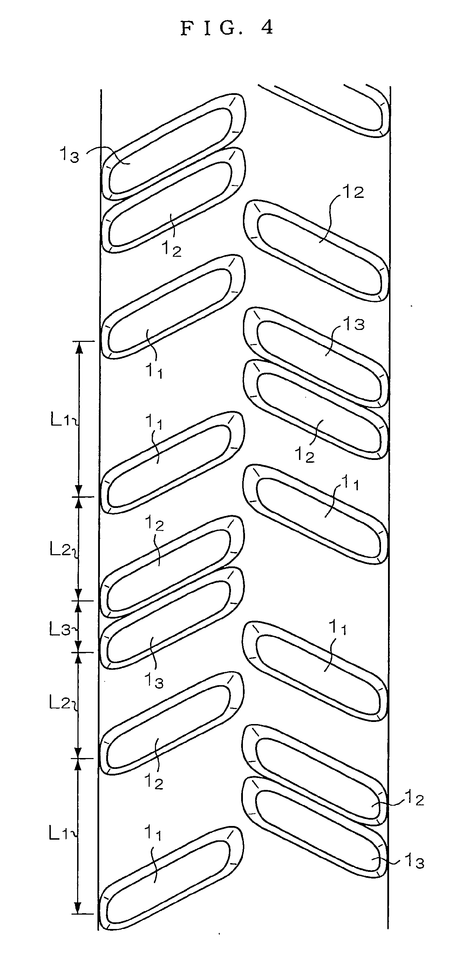

Fig. 4 shows an example in which a tread pattern is implemented on an outer surface of a crawler. The pattern includes a tread lug arrangement in which the tread lugs on the right and left areas are disposed so as not to overlap one another when seen from the side surface (along a cross-section along the width direction center of the tread), an arrangement where long-pitches are interposed between middle-pitches and short-pitches, tread lug arrangements on the left and right areas exhibit a reversely pitched arrangement.

The tread pattern of the left area of the tread includes the long-pitched (L₁) tread lugs 1₁, middle-pitched (L₂) tread lugs 1₂ with the tread lugs 1₁ interposed therebetween, and short-pitched (L₃) tread lugs 1₃ with the tread lugs 1₁ and 1₂ interposed therebetween. Accordingly, in terms of vibration, when the tracker rollers roll along the internal circumferential surface of the crawler, larger vibration occurs in the area between the tread lugs 1₁ due to large falling amount of the roller, less vibration occurs in the area between the tread lugs 1₁ and 1₂, and substantially no vibration occurs in the area between the tread lug 1₂ and the tread lug 1₃. In terms of traction, however, the area between the tread lugs 1₁ and 1₁ exhibits excellent traction, the area between the tread lugs 1₁ and 1₂ exhibits less traction, and the area between the tread lugs 1₂ and 1₃ does not exhibit much traction.

In the tread pattern of the right area of the tread, the tread lugs 1₃ and 1₂ are disposed so as to correspond to the pitch L₁ of the left side area, and the tread lug 1₁ is disposed so as to correspond to the pitch L₂ on the left side area. Thus, in terms of generation of vibration, the tread has no portions where the tracker rollers rolling along the internal circumferential surface of treads in both left and right side areas fall a great amount. As a result, a substantially uniform vibration condition is achieved throughout the tread.

In terms of traction, regardless of what portion of the crawler is in contact with the ground, there is substantially no difference in traction.

The total areas of the contact patches of the left and right areas are substantially equal to each other. Accordingly, the traction of the right and left areas of the tread becomes substantially equal to each other. Thus, twisting and oblique movement of the crawler can be prevented.

Long-, middle-, and short-pitches need not necessarily be disposed in the described order. It suffices that the right and left areas of the tread are well-balanced.

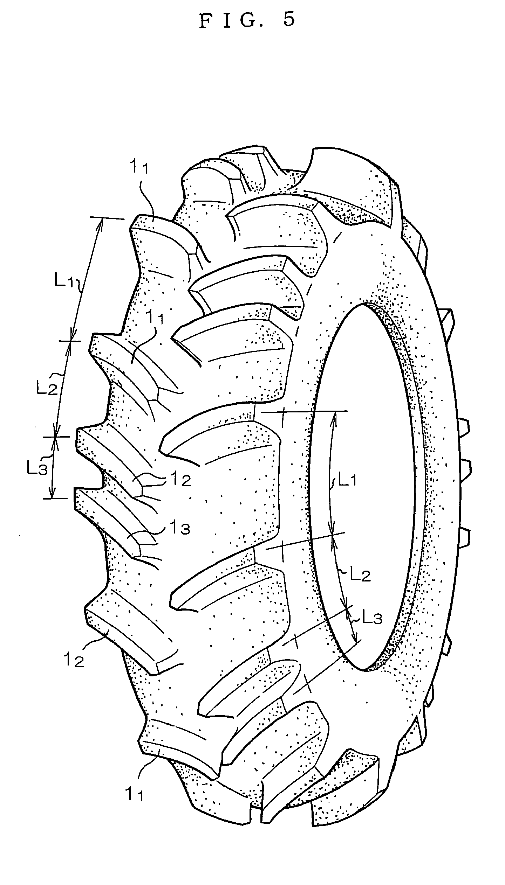

Fig. 5 shows an example where the tread pattern is applied to a tire of a tractor. In this example, effects similar to those shown with respect to Fig. 4 can be achieved.

### Industrial Applicability

The invention provides a tread pattern which is excellent not only in vibration reduction but in providing traction. The invention can be applied not only to crawlers but to treads of tires in which a contact patch rolls.
Accordingly, the invention has great applicability.

### Description of Reference Numerals

1, 1₁, 1₂, 1₃: tread lugs
L₁: long pitch
L₂: middle pitch
L₃: short pitch

## Claims

1. A tread pattern which provides improved traction with reduced vibration generation in which a contact patch is divided in the width direction thereof into right and left areas with respect to the traveling direction of the vehicle and each of the right and left areas is provided with tread lugs,
wherein long-, middle-, and short-pitches are provided in each of the right and left areas, the tread patterns of the right and left areas are asymmetrical to each other, and total areas of the contact patches of each of the right and left areas are substantially equal to each other.

2. The tread pattern according to claim 1, wherein the tread lugs are disposed such that long-pitches are interposed between middle-pitches and short-pitches.

3. The tread pattern according to claim 1, wherein the tread lugs in the right and left areas of the tread are disposed so as not to substantially overlap one another in a cross-section along the width direction center of the tread.

4. The tread pattern according to claim 1, wherein the tread lugs are disposed such that long-pitches are interposed between middle-pitches and short-pitches, and the tread lugs disposed on one of the right and left areas of the tread are reversely pitched with respect to the tread lugs disposed on the other of the areas.

5. The tread pattern according to claim 1, wherein the short-pitched tread lugs are disposed with substantially no space defined therebetween.

6. The tread pattern according to claim 1, wherein each tread lug is angled by about 30 degrees with respect to the width direction of the tread.

7. A tread pattern, comprising:
a contact patch which is divided in the width direction thereof into right and left areas with respect to the traveling direction of the vehicle; and
at least one tread lug disposed in each of the right and left areas of the contact patch at a certain angle with respect to the width direction of the tread,
wherein the pitches of the tread lugs in each of the right and left areas of the tread vary in the circumferential direction of the tread, and the tread lugs disposed in one of the right and left areas are offset in the circumferential direction of the tread with respect to the tread lugs in the other of the areas.

8. The tread pattern according to claim 7, wherein total areas of the contact patches of each of the right and left areas of the tread are substantially equal to each other.

9. The tread pattern according to claim 7, wherein intervals between adjacent tread lugs in each of the right and left areas of the tread are selected from long-pitch, middle-pitch and short-pitch.

10. The tread pattern according to claim 9, wherein the tread lugs of the tread are disposed such that long-pitches are disposed between short-pitches with middle-pitches interposed between long pitches and short pitches, and such order is repeated along a circumferential direction of the tread.

11. The tread pattern according to claim 10, wherein the tread lugs disposed on one of the right and left areas of the tread are reversely pitched with respect to the tread lugs disposed on the other of the areas.

12. The tread pattern according to claim 9, wherein the short-pitched tread lugs are disposed with substantially no space defined therebetween.

13. The tread pattern according to claim 7, wherein the tread lugs in the right and left areas of the tread are disposed so as not to substantially overlap one another in a cross-section along the width direction center of the tread.

14. The tread pattern according to claim 7, wherein each tread lug is angled by about 30 degrees with respect to the width direction of the tread.

15. The tread pattern, comprising:
a contact patch divided in the width direction thereof into right and left areas with respect to the traveling direction of the vehicle; and
a plurality of tread lugs provided on each of the right and left areas of the tread and angled by a predetermined angle with respect to the width direction of the tread, pitches of adjacent tread lugs being selected from long-pitch, middle-pitch and short-pitch,
wherein the tread lugs of the tread are disposed such that long-pitches are disposed between short-pitches with middle-pitches interposed between long pitches and short pitches, and such order is repeated along a circumferential direction of the tread, and the tread lugs disposed in one of the right and left areas are offset in the circumferential direction of the tread with respect to the tread lugs in the other of the areas.

16. The tread pattern according to claim 15, wherein total areas of the contact patches of each of the right and left areas of the tread are substantially equal to each other.

17. The tread pattern according to claim 15, wherein the tread lugs disposed on one of the right and left areas of the tread are reversely pitched with respect to the tread lugs disposed on the other of the areas.

18. The tread pattern according to claim 15, wherein the tread lugs in the right and left areas of the tread are disposed so as not to substantially overlap one another in a cross-section along the width direction center of the tread.

19. The tread pattern according to claim 15, wherein each tread lug is angled by about 30 degrees with respect to the width direction of the tread.
